# EUROPEAN PATENT APPLICATION

(11) **EP 0 556 987 A1**
(43) Date of publication of application: **25.08.1993**
(21) Application number: 93300844.3
(22) Date of filing: 04.02.1993
(51) Int. Cl.: G01N 21/88

(54) **Coating defect detection system based on light scattering outside the expected region**

(30) Priority: 13.02.1992 US 835172
(71) Applicant: AT&T Corp., New York, NY 10013-2412 (US)
(72) Inventor: Frazee, Ralph Edward, Jr., Bricktown, New Jersey 08723 (US); Lovelace, Charles Ridley, Unio City, Georgia 30291 (US); Smithgall, David Harry, East Windsor, New Jersey 08520 (US)
(74) Representative: Johnston, Kenneth Graham

(57) **Abstract**

A defect detection system (10) of this invention applies one or more orthogonally-aligned light beams (22 and 24) to a coated fiber (32) such that the light passes through the entire width of both the fiber (32) and its applied coating (31). As the light passes through a fiber (32) and coating (31) of good quality, a particular pattern, with a predictable intensity level, is produced by the forward scattered portions of the light beams directed through the coated fiber (32).

In accordance with the present invention, the intensity of the forward scattered patterns is continuously monitored by a series of photodiodes (44, 45, 46 and 47) each located adjacent to the expected forward scatter pattern. Various defects in the coating cause the path of the light passing through the coated fiber (32) to be altered, thereby directing some of the forward scattered light outside of the normally expected pattern and into the detection area of the photodiodes (44, 45, 46 and 47). Such distortion to the forward scatter patterns causes the light intensity level measured at the photodiodes (44, 45, 46 and 47) to increase. Therefore, by continuously monitoring the light intensity level adjacent to the forward scatter patterns for an increase of light relative to the light intensity expected, the present invention provides reliable and accurate means for detecting temporally short defects, such as air bubbles, which may be present within the coating (31) of a fiber (32).

## Description

### Technical Field

This invention relates to an out-of-pattern coating defect detection system.

### Background of the Invention

Primarily because of their increasing use in optical communication systems, the fabrication and subsequent processing of optical fibers continue to be subjects of intensive research and development. Optical fibers are typically made in a continuous process which involves drawing a thin glass strand or fiber from a heat-softened glass preform. In addition, it is relatively common for the glass fibers thereafter to be coated with some type of polymeric material to provide protection from various environmental concerns, as well as increase the structural strength of the fiber.

Due to the relatively strict operational constraints under which a glass fiber must perform when part of an optical communication system, the fiber manufacturing process should be precisely monitored and controlled. In addition, the many operational characteristics of an optical fiber can be compromised if any defects are present in the protective coating applied to the fiber during the drawing process. Therefore, monitoring should not be directed only at the drawing process of the glass strand, but to the coating application process as well.

In the past there have been various attempts to monitor and verify the accuracy with which a coating layer is applied to the optical fiber. Parameters such as diameter, ellipticity, and fiber-to-coating concentricity each change relatively slowly during the drawing process. At present, such parameters are sometimes measured and controlled by various adjustments at the coating applicator. Generally, devices employing various scanning techniques are utilized to monitor the slow changing parameters identified above.

A particular method for monitoring the fiber-to-coating concentricity of the optical fiber polymeric coating by directing orthogonal light beams at the coated fiber has been disclosed. The specific details of this concentricity monitoring method may be found in a paper by Ralph E. Frazee, Jr. and David H. Smithgall entitled "High Speed Measurement and Control of Fiber-Coating Concentricity," the *Bell System Technical Journal*, Vol. 60, No. 9, November, 1981, pp. 2065-2080, hereby expressly incorporated by reference herein.

However, the particular devices presently used to measure the previously identified, slow-changing parameters are not capable of accurately identifying and responding to signals identifying defects which are temporally short in duration at line draw speeds. Very often, such defects escape detection by the various coating monitors presently available which employ scanning techniques. Among the short duration signals generally not detectable with existing devices are signals indicative of defects caused by inclusion of particulates which alter the coating diameter, entrapped bubbles which frequently erupt on the surface or high viscosity particles pulled through the applicator die. Each of these particular defects is exemplary of types of defects which can cause a loss of lightguide product during subsequent processing.

The only such defects that existing devices consistently and accurately detect are those which happen to be exceptionally large. The development of a system capable of dependably detecting short-duration defects as part of the on-line fiber processing would allow for reworking around the defect before placing the fiber into a cable for operation. A savings in both product materials and production time will be realized, in addition to the increase in the quality of the fiber ultimately positioned within a communication system.

In light of the above-identified problems with the present technology, what is needed and what seemingly is not provided by the prior art is a dependable system capable of accurately detecting defects which may exist in a coating layer applied to an optical fiber. Furthermore, the sought-after coating defect detection system should utilize a non-destructive inspection technique which causes no degradation to the quality of a coated fiber as a result of the inspection. Still further, the sought-after coating defect detection system should be operable to provide reliable detection of defects which are temporally short in duration and adaptable to be incorporated within the conventional on-line processing sequences used to manufacture optical fibers.

The present application is directed to one defect detection method, namely an out-of-pattern analysis technique, while a second commonly assigned application U.S. Serial No. 07/826350, discloses another defect detecting method, namely an in-pattern analysis technique.

### Summary of the Invention

The foregoing problems of the prior art have been overcome by the out-of-pattern coating defect detection system set forth in the claims.

### Brief Description of the Drawing

FIG. 1 is a top view of the opto-mechanical layout of one embodiment of the out-of-pattern coating defect detection system of the present invention;
FIG. 2 is a top view of the opto-mechanical layout of another embodiment of the out-of-pattern coating defect detection system of the present invention;
FIG. 3 is a light beam ray trace of the refracted light through a cross-section of a coated fiber;
FIG. 4 is a block diagram representative of the over-all circuitry utilized to perform the operation of the present invention;
FIG. 5 is an electrical schematic of the input amplifier and compensation circuit utilized in the present invention; and
FIG. 6 is an electrical schematic of the fiber presence detection circuitry utilized in the present invention.

### Detailed Description

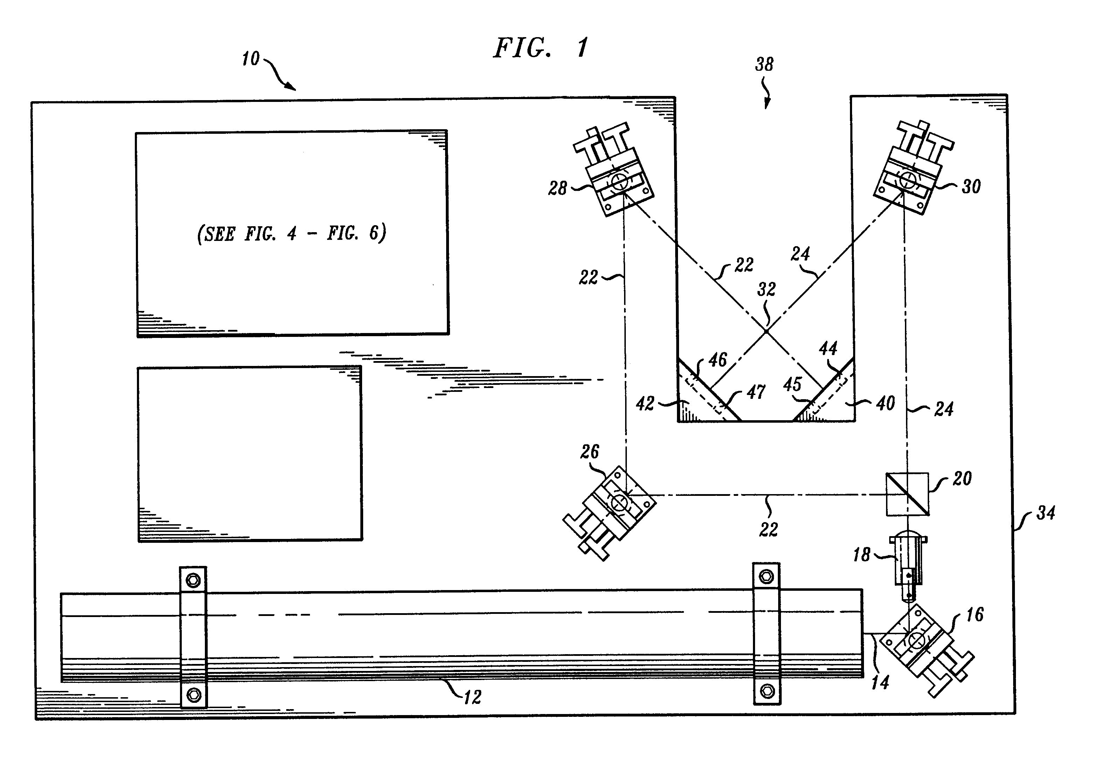

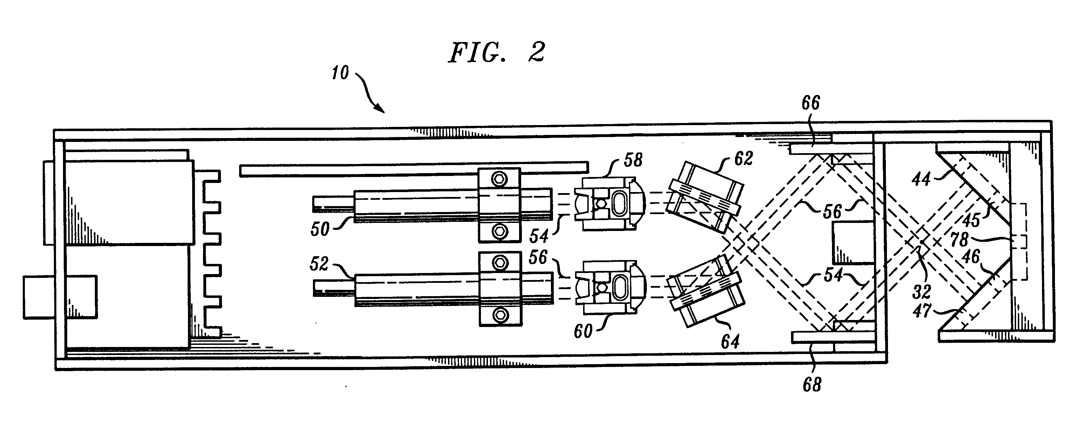

Two particular embodiments of the optical and mechanical design of the continuous, out-of-pattern coating defect detection system 10 of the present invention are illustrated in FIG. 1 and FIG. 2. In general, the detection system 10 incorporates an orthogonal illumination scheme to apply at least one light beam through a coated fiber. More specifically, the present invention utilizes an out-of-pattern inspection technique to detect coating defects within the particular portion of coated fiber being illuminated. While the preferred employment of the present invention is to inspect coating applied to a glass optical fiber, it should be noted that the coating layers of other non-glass strand materials may also be inspected using the present invention.

As used herein, the phrase out-of-pattern inspection refers to a technique wherein some type of photodetection means is precisely positioned just aside the forward scatter pattern generated when light is shone through a properly coated fiber. To identify coating defects, the out-of-pattern technique continuously monitors the intensity of light just outside the expected forward scatter pattern for an increase in the light received. Such an increase of light intensity indicates the presence of a defect which caused a portion of the light shone through the coated fiber to be scattered outside of the normal forward scatter pattern and into the area being monitored by the photodetectors.

There are two particular opto-mechanical arrangements or embodiments disclosed herein to carry out the out-of-pattern coating defect detection technique of the present invention. The first embodiment is a one-laser configuration which is relatively similar to the opto-mechanical arrangement disclosed in the copending, commonly-assigned application identified above, with the exception of the physical positioning of the photodetectors. This first embodiment is illustrated in FIG. 1 and discussed immediately below. The second embodiment utilizes a multiple laser configuration as illustrated in FIG. 2 and is discussed in greater detail later within this document.

As can be seen in FIG. 1, one embodiment of the present invention comprises a helium neon laser 12 which emits a beam 14 which is directed by a mirror 16 into a beam expander 18. In the preferred embodiment, a 6x beam expander is utilized. The beam 14 is then split by a beam splitter 20, preferably a 50/50 cube-type, and directed along two separate optical paths 22 and 24.

Through the use of three adjustable mirrors 26, 28 and 30, the split beams traveling along optical paths 22 and 24 are directed to orthogonally impinge on a fiber 32 having a coating layer 31. In addition, a fiber-throughway opening 38 is designated as the cut-out portion of base plate 34 which the fiber 32 passes through in a direction perpendicular to the base plate 34 as it travels along the fiber processing path. The fiber-throughway opening 38 creates two inward corners 40 and 42 within base plate 34 as shown in FIG. 1.

In order to properly position the photodetectors just outside the expected forward scatter pattern, a series of photodetectors 44, 45, 46 and 47 are secured within inward corners 40 and 42 respectively of base plate 34. In the preferred embodiment, the particular photodetectors used are BPX65 photodiodes manufactured by Centronics Incorporated which have good high frequency response, sensitivity and relatively low cost. These specific photodiodes have a 1 mm square active area and are generally mounted in a TO-18 type, 2-pin header. When the laser 12 is on and a coated fiber 32 in position, a forward scattered light pattern should be formed immediately adjacent to each photodiode 44, 45, 46 and 47. However, if slightly misaligned, mirror adjustments may be made to position the pattern adjacent to the active area of the photodiodes 44, 45, 46 and 47.

The beam expander 18 of this embodiment of the present invention may be assembled separately. Two piano-cylindrical lenses of different focal length, a 6.35 mm and a 40.0 mm respectively, are mounted with a silicone rubber type adhesive to the expander system rail. The lenses are mounted piano side toward piano side and are initially spaced at 46.35 mm. This particular degree of spacing produces a nearly recollimated 6.3 times expansion of the beam in one direction. The preferred configuration of the beam expander 18 allows slight spacing adjustments to be made after installing the module to bring the beam into collimation. The beam expander 18 is positioned on the base plate 34 between the first mirror 16 and the splitter cube 20.

At present, the particular embodiment detailed immediately above is positioned on the draw tower base, where the fiber path is horizontal and parallel with the base plate 34. With the physical arrangement of the previously described embodiment, the fiber 32 travels through the thickness of the detection system 10, in the three-sided fiber-through-opening 38, where it is impinged by orthogonal laser beams 22 and 24. Unfortunately, such positioning of the detection system 10 leaves the length of the optics head sticking up vertically from the tower base into the operator's work area, thereby making the optical alignment sensitive to accidental bumps.

An alternative embodiment of the present defect detection system is also disclosed herein and illustrated in FIG. 2. The particular alternative embodiment disclosed, allows the detection system 10 to be physically located at a different point along the fiber processing path than the earlier disclosed embodiment, because it is substantially smaller than the size of the previously described embodiment.

The opto-mechanical design of the second embodiment of the present defect detection system is illustrated in FIG. 2. This particular arrangement employs two separate solid state lasers, 50 and 52 to generate light beams 54 and 56, respectively. The lasers used in the preferred embodiment are Melles Griot Model 06DBL102/P. The output power of each laser 50 and 52 is about 3mw at 670 nm. Two piano-convex cylindrical lenses 58 and 60 are positioned in each beam 54 and 56, respectively, to expand the associated beam horizontally and recollimate it to a 6mm width. Four mirrors 62, 64, 66 and 68, two in each beam, are utilized to direct the light beam 54 and 56 to the fiber 32. Specifically, light beam 54 is directed to the fiber 32 via mirrors 62 and 68, whereas mirrors 64 and 66 are used to direct light beam 56 to the fiber. The mechanical placement of these mirrors causes the beams to be substantially orthogonal to both the fiber and each other when located at the position where they impinge the fiber.

As stated earlier, the optical detection technique described herein is based on monitoring the out-of-pattern scattering caused by defects. Five photodiode detectors may be used in the preferred arrangement of this second embodiment system. As stated with regard to the earlier described embodiment, the particular photodiodes preferred are Model BPX65, which are manufactured by Centronics Incorporated, and have good high frequency response, sensitivity, and relatively low cost.

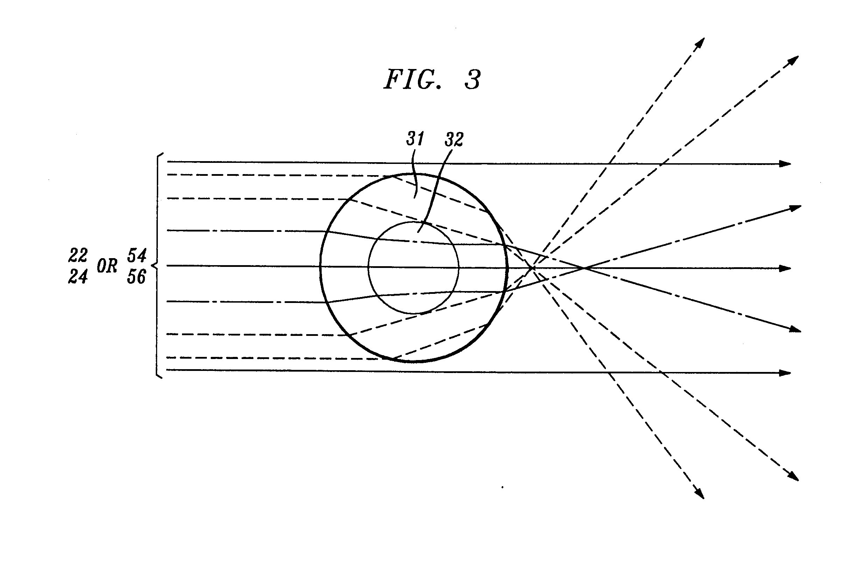

Four of the photodiodes, namely elements 44, 45, 46 and 47 of FIG. 2, are used to detect the out-of-pattern scattering caused by a coating defect. Since the photodiodes utilized in both embodiments are identical, like reference numerals are used herein to identify the photodiodes throughout the discussions of both embodiments set forth. In particular, photodiodes 44 and 45 are precisely aligned immediately adjacent the expected forward scatter pattern of light beam 54, while photodiodes 46 and 47 are aligned aside the expected forward scatter pattern of light beam 56. A fifth photodetector 78 is used to detect the presence of a laser illuminated coated fiber by monitoring a pattern from each axis generated when light is scattered through the cylindrical coating layer 31, as illustrated in FIG. 3.

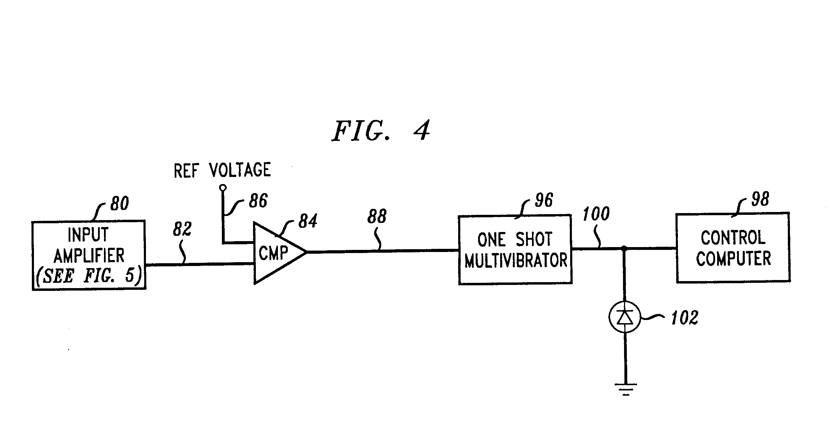

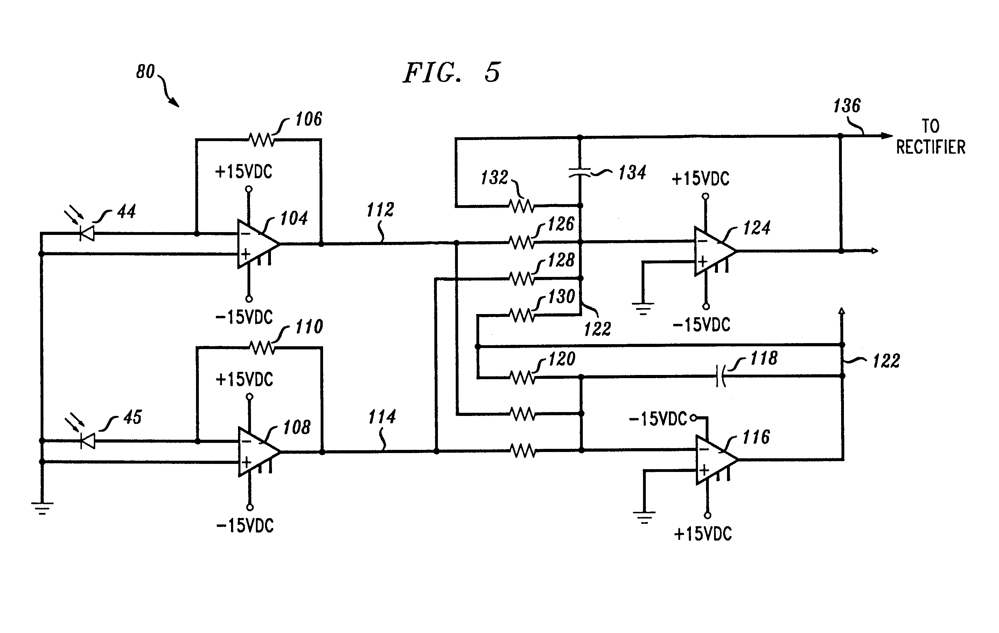

The electronic circuitry to be used to implement either embodiment of the coating defect detection system is illustrated in FIG. 4 and FIG. 5. FIG. 4 depicts the overall circuitry utilized to operate the present defect detection system, while FIG. 5 details the specifics of an input amplifier circuit incorporated into the overall circuitry of FIG. 4 for each optical axis.

As stated earlier and illustrated in FIG. 4, each embodiment of the present invention incorporates four defect photodiodes with a pair of these photodiodes positioned in each scattering axis. Electronically equivalent input amplifier stages 80 (see FIG. 5 for detailed circuitry) are provided for each optical axis. An output 82 of each input amplifier stage 80 is processed via comparator 84. Comparator 84 has as its inputs, output signal 82 and a reference voltage 86. Furthermore, the comparator 84 generates a defect signal channel 88, for the particular optical axis it is servicing.

As illustrated in FIG. 4, the reference voltage is adjusted during calibration and establishes the system sensitivity. As stated, a reference voltage 86 and the signal voltage 82 are differentially input to differential voltage comparator 84. An output 88 from the comparator 84 is input to a one shot multivibrator 96 which stretches the triggering pulse to a sufficient length of time for the control computer 98 to acquire the data. This stretched output 100 also illuminates a display LED 102 for operator information. An electronically identical circuit as described above and illustrated in FIG. 4 is utilized to process each of the optical axis generated.

The following circuit description of the input amplifier 80, a composite single axis defect signal channel, and the output stage of one axis will be more easily understood by referencing the electronic schematic of FIG. 5. As shown in FIG. 5, the anode of photodiode 44 is connected to the inverting input of operational amplifier 104. A resistive feedback, via resistor 106, configures amplifier 104 as a transresistance amplifier or a current-to-voltage converter. An identical electrical configuration is employed around diode 45 with op-amp 108 and resistive feedback, via resistor 110, configuring the transresistance amplifier or the current-to-voltage converter.

The two voltage outputs 112 and 114 from input op-amps 104 and 108, respectively, are summed on the inverting input of amplifier 116. A capacitor 118 in the feedback loop changes this circuit function to a low pass filter and resistor 120 holds the gain to unity. The output voltage 122 from this circuit is used to remove any quiescent voltage levels from getting into the defect signal channel.

The voltage outputs 112 and 114 from the op-amps 104 and 108 are summed again along with the filtered inverted signal 122 from amplifier 116 at the inverting input of amplifier 124. The gain of amplifier 124 is set by input resistors 126, 128 and 130 and feedback resistor 132 to a gain of 27 db. A small capacitor 134 in the feedback of amplifier 124 improves the stability of the circuit. The direct coupled signals which are summed into amplifier 124 produce an output from amplifier 124 which is similar to that of a differentiator; that is, exhibiting relatively high gains for input voltage changes (slopes), and low gains for stable levels. Therefore, the output signal 136 from amplifier 124 will be positive or negative going signal swings around a near ground (zero voltage) level.

The output signal 136 from amplifier 124 is further processed by a full wave rectifier (not shown) whose output is a unipolar signal with an amplitude directly related to the intensity change on the photodiode, and therefore to the severity of the defect. This proportionality allows the output of the rectifier to be compared to an established unipolar reference voltage as done in comparator 84 of FIG. 4.

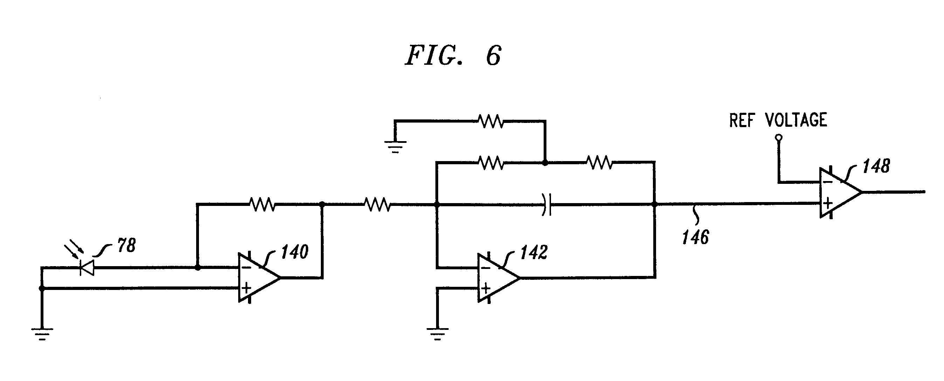

A separate independent signal channel is utilized for the fiber present photodiode 78. The fiber presence detector circuit is specifically illustrated in FIG. 6. The fiber presence circuit function is to detect when a coated fiber 32 is in the inspection area and to determine if the fiber 31 is being struck by sufficient laser beam power. The signal on the anode of photodiode 138 is input to a transresistance configured operational amplifier 140. The gain of this circuit is lower than the previously described inputs because photodiode 138 resides in the normal scattered light pattern. The position of diode 138 also makes it susceptible to fluctuations in scattered light power due to parametric changes quite apart from coating defects. Therefore, the output of op-amp 140 is heavily filtered in the next stage of amplification by op-amp 142 and its associated electrical components as shown in FIG. 6. This circuit has a response time of 10 -12 seconds. The filtered output 146 is compared against a fixed reference voltage level at the differential voltage comparator 148. The output of the comparator 148 is used to illuminate LED 102 of FIG. 4 for operator information and is presented as data to the computer 98 also shown in FIG. 4.

The above descriptions have detailed optical, mechanical and electrical configurations in accordance with the preferred embodiment of the present invention. The particular operation of the present coating defect detection system will now be discussed. As stated earlier, glass fibers for use in optical communication systems are manufactured by a drawing process. During the drawing of a glass fiber, a coating layer is conventionally applied to provide additional strength enhancement for the fiber or to provide protection from various environmental concerns which may inhibit the operation of the fiber.

Generally, the draw process includes a series of on-line processes performed sequentially. The present invention provides a detection system which may be incorporated on-line to detect coating defects to avoid installing a fiber with unknown coating defects into a communication cable. The instant detection system is installed at a location after the application of the coating layer but prior to the fiber take-up. As the fiber 32 passes through the system, light beams 22 and 24 of the first embodiment described, or light beams 54 and 56 of the alternate embodiment described herein, illuminate a portion of the coated fiber 32 across its entire outer diameter. A forward scatter pattern as generally shown in FIG. 3 is generated opposite each light source as the light passes through the coating layer 31 and/or the fiber 32.

A series of photodiodes 44, 45, 46 and 47 is positioned immediately adjacent the forward scatter pattern expected to be produced as light passes through a properly coated fiber. 32 However, various defects cause portion of the light to be scattered outside the expected forward scatter pattern. The present invention continuously monitors the light intensity level of an area adjacent the expected forward scatter pattern. When the light intensity within the monitored area increases, an indication is generated such that a monitor computer 98 or an LED display 102 can identify the presence of a defect within the coating layer.

As stated earlier, the heart of the out-of-pattern detection technique utilized in the present invention relies on recognizing an increase in light intensity by photodetectors positioned immediately adjacent an expected forward scatter pattern to indicate the presence of a defect. It should be specifically noted that even though particular circuitry is disclosed herein, minor variations in the particular electronic monitoring used to measure the light intensity aside the forward scatter pattern for the purpose of detecting coating defects is deemed to be within the scope of the present invention regardless of the exact electronic components or configuration employed.

## Claims

1. A system for detecting defects within a coating layer characterized by
means for illuminating a coated strand with light so as to create an expected forward scatter pattern indicative of a forward path and intensity of the light when shone through a coating layer of acceptable quality; and
means for monitoring the intensity level adjacent to the expected forward scatter pattern for an increase in light as an indication that a defect exists within the coating layer.

2. The defect detection system of claim 1 wherein the illuminating means further comprises beam splitter means which generates at least two substantially equivalent light beams from a single light beam emitted from the laser source.

3. The defect detection system of claim 1 wherein the monitoring means comprises at least two photodetectors positioned immediately adjacent the expected forward scatter pattern.

4. The defect detection system of claim 1 wherein the coated strand is illuminated by at least two orthogonally-aligned light beams.

5. The defect detection system of claim 1 wherein the light which illuminates the coated strand has a beam-width wider than the outer diameter of the coated strand.

6. A method of detecting defects within a coating layer characterized by the steps of:
illuminating a coated strand with light so as to create an expected forward scatter pattern indicative of a forward path and intensity of the light when shone through a coating of acceptable quality; and
monitoring the intensity level adjacent to the expected forward scatter pattern for an increase in light as an indication that a defect exists within the coating layer.

7. The defect detection method of claim 6 wherein the coated strand is illuminated by at least two orthogonally-aligned light beams.

8. The defect detection method of claim 6 wherein the light which illuminates the coated strand has a beam-width wider than the diameter of the coated strand.

9. The defect detection method of claim 6 wherein the intensity level of the forward scatter pattern is monitored by at least two photodiodes positioned immediately adjacent to the expected forward scatter pattern.

10. The defect detection method of claim 6 wherein the intensity level monitoring has a response time which is sufficiently short to allow defects of relatively short duration to be accurately detected as part of an on-line processing scheme.
